# EUROPEAN PATENT SPECIFICATION

(11) **EP 0 257 440 B1**
(45) Date of publication and mention of the grant of the patent: **21.07.1993**
(21) Application number: 87111641.4
(22) Date of filing: 11.08.1987
(51) Int. Cl.: B23K 11/00, B23K 11/14

(54) **Method and apparatus for manufacturing piston rod**
Verfahren und Gerät zur Herstellung einer Kolbenstange
Méthode et appareil pour fabriquer une bielle de piston

(30) Priority: 25.08.1986 JP 198563/86; 14.01.1987 JP 7186/87; 14.01.1987 JP 7187/87; 14.01.1987 JP 3979/87 U
(43) Date of publication of application: 02.03.1988
(73) Proprietor: NIHON RADIATOR CO., LTD., Nakano-ku Tokyo (JP)
(72) Inventor: Suzuki, Masaomi, Tokyo (JP); Koizumi, Hiroyasu, Yokohama-shi, Kanagawa-ken (JP)
(74) Representative: Prato, Roberto

(56) References cited:
- CH-A- 452 739
- DE-A- 2 219 224
- DE-A- 2 411 818
- PATENT ABSTRACTS OF JAPAN, vol. 7, no. 240 (M-251)[1385], 25th October 1983; & JP-A-58 128 522 (TOKYO SHIBAURA DENKI K.K.) 01-08-1983
- PATENT ABSTRACTS OF JAPAN, vol. 7, no. 237 (M-250)[1382], 21st October 1983 & JP-A-58 124 815 (TOKYO SHIBAURA DENKI K.K.) 25-07-1983
- AWS WELDING HANDBOOK, 7 th Ed., vol 3, pages 8-11 DIN 44753

## Description

The present invention relates to method and apparatus for manufacturing piston rod, and is particularly concerned with a manufacturing method for piston rod for welding a ball to an end surface of the rod through friction or projection, of the type described in the preamble of claim 1, and a manufacturing apparatus for piston rod used for the manufacturing method for piston rod, of the type described in the preamble of claim 2.

Generally in a variable capacity compressor, a piston rod with a ball welded to both ends of the rod through friction is used as disclosed, for example, in Japanese Patent Publication No. 23390/1986.

That of being disclosed, for example, in Japanese Patent Laid-Open No. 124815/1983 is known as a prior art piston rod of this kind, and that of being disclosed, for example, in Japanese Patent Laid-Open No. 54346/1973 and Japanese Patent Laid-open No. 128522/1983 is known as a manufacturing method therefor.

Fig. 14 represents a piston rod of this kind, wherein the piston rod is formed of having a ball 2 consisting, for example, of SUJ2 steel welded, through friction, to both ends of a rod 1 consisting, for example, of S20CD steel.

Fig. 15 represents a manufacturing method for such piston rod, wherein the ball 2 and the rod 1 are subjected to a friction welding by butting the rod 1 against the ball 2 as rotated at high speed.

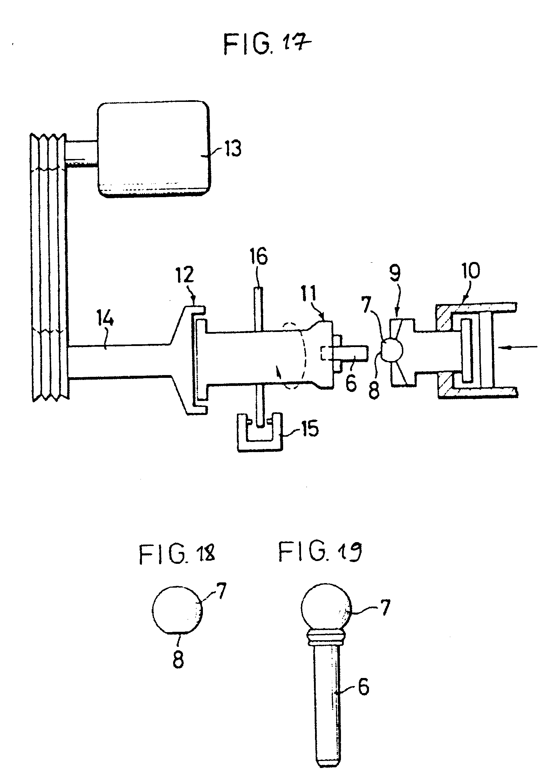

However, since a friction welding of the ball 2 to the rod 1 is performed in the atmosphere, the conventional manufacturing method for piston rod involves a problem that an oxide 3 is formed lengthwise, for example, at 5 to 9 mm on the surface of a but weld zone of the rod 1 to the ball 2 as shown in Fig. 16.

That is, if such oxide 3 is formed, a quality of the piston rod deteriorates, a dimensional accuracy required on design is not secured, accordingly, a post-process such as grinding or the like is required, thus resulting in an increase in working cost.

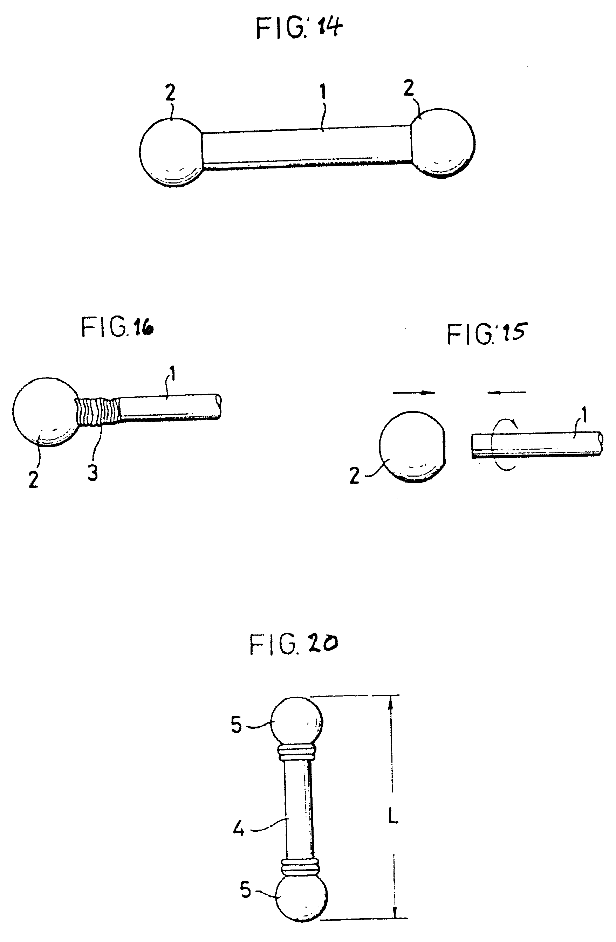

Fig. 17 represents a conventional manufacturing apparatus for the piston rod shown in Fig. 14, and in the drawing a reference numeral 9 denotes a ball holder for holding the ball 2 mechanically thereon. The ball holder 9 is shiftable axially by a cylinder 10. A rod holder 11 for holding a rod 6 is disposed against the ball holder 9. The rod holder 11 is connected to a rotor 14 driven by a motor 13 through a clutch 12. Then, a brake disk 16 braked by a brake 15 is fixed on the rod holder 11.

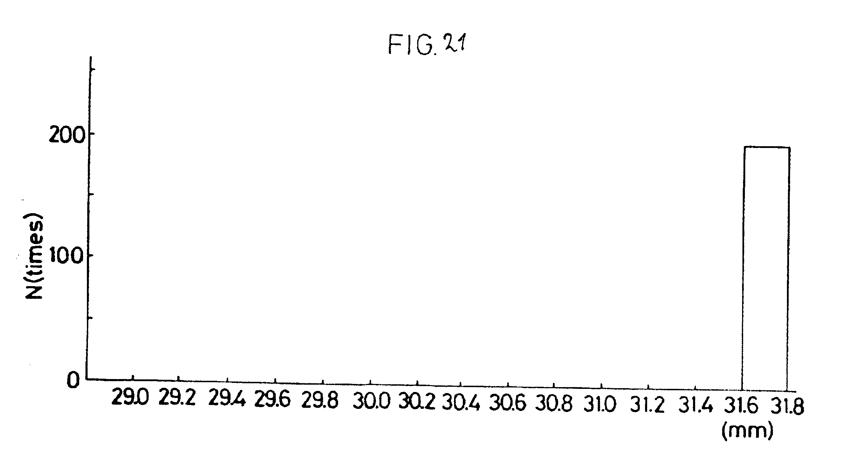

In the manufacturing apparatus for piston rod constructed as above, a ball 7 having an end surface 8 formed as shown in Fig. 18 through cutting is held mechanically on the ball holder 9, the rod 6 is also held on the rod holder 11, the motor 13 is then driven to rotate the rod holder 11, the cylinder 10 is actuated on the one hand, the end surface 8 of the ball 7 held on the ball holder 9 is pushed to an end surface of the rod 6 held on the rod holder 11, thereby welding the rod 6 to the ball 7 through friction as illustrated in Fig. 19.

However, according to such conventional method, since the ball 7 is held on the ball holder 9 through a mechanical clamping, a setup time is required so long for centering, thus deteriorating a working efficiency.

On the other hand, the ball 7 and the rod 6 must be held on a force considerably strong for friction welding, and thus a clamp mechanism for the ball holder 9 and the rod holder 11 is rather complicated.

Fig. 20 represents a piston rod of this kind which is formed through projection welding, wherein the piston rod is formed of having a ball 5 consisting, for example, of SUJ2 steel welded, through projection, to both ends of a rod 4 consisting, for example, of S20CD steel.

According to the projection welding, the ball 5 is held on one electrode, while the rod 4 is held on another electrode, and after bringing an end surface of the rod 4 into contact with the ball 5, a current is carried between both electrodes, thereby welding the rod 4 to the ball 5.

Meanwhile, in the piston rod obtained through projection welding, a projection weld zone is kept hardened by intense heat, therefore a hard and fragile structure is formed on the connection, and thus a mechanical property is deteriorated.

Now, therefore, in the piston rod for which a predetermined mechanical strength is required, the projection weld zone is tempered after welding hitherto.

However, for the tempering the piston rod is carried to a heat treatment apparatus after welding, which requires a heat treatment process in addition and thus involves a deterioration of working efficiency.

Further, such conventional method is capable of causing a big dispersion in an overall length (dimension L in Fig. 20) of the piston rod welded through projection, and thus a quality control becomes very difficult.

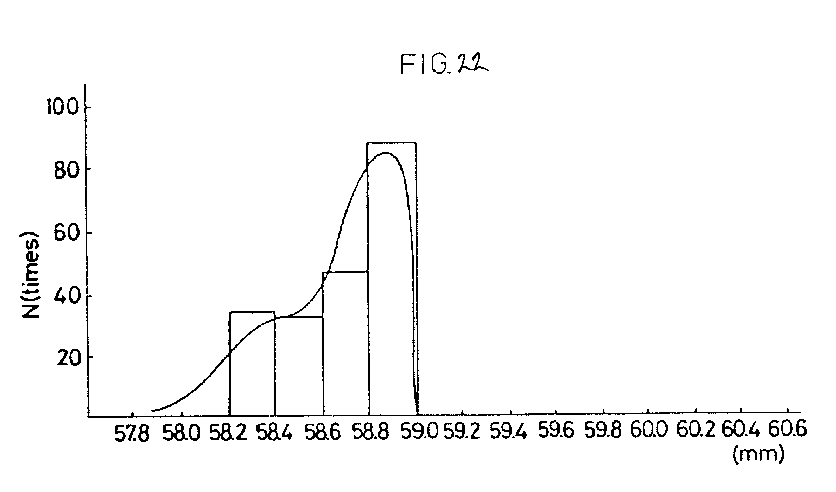

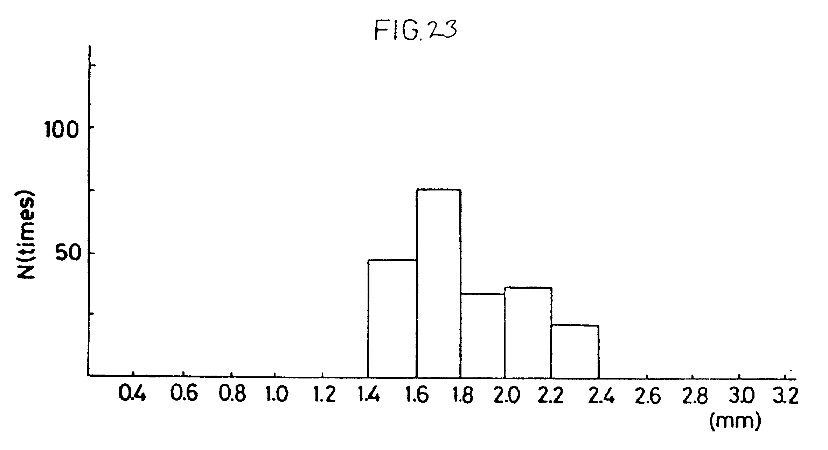

That is, as shown in Fig. 21, in case the balls 5 of a diameter are subjected to projection welding to both ends of the 200 rods 4 almost of a length, an overall length L of the piston rod is dispersed extensively as 35 pieces between 58.2 mm and 58.4 mm, 34 pieces between 58.4 mm and 58.6 mm, 44 pieces between 58.6 mm and 58.8 mm and 87 pieces between 58.8 mm and 59.0 mm as shown in Fig. 22, and the then length of penetration is also dispersed extensively as 45 pieces between 1.4 mm and 1.6 mm, 75 pieces between 1.6 mm and 1.8 mm, 29 pieces between 1.8 mm and 2.0 mm, 30 pieces between 2.0 mm and 2.2 mm, 21 pieces between 2.2 mm and 2.4 mm as shown in Fig. 23.
Document DE-A 2 411 818 discloses a manufacturing method having the features of the preamble of claim 1 and wherein a ball is fixed on end surface of a rod through resistance welding whereby the said ball held in one electrode, while said rod is held in another electrode, the end surface of the said rod is brought into contact with said ball, a current is then carried between said electrodes to welding of said rod and ball, the welding being carried out in a shielding gas atmosphere. To realize said resistance welding, at the end surface of the rod it is preliminary made an internal conical recess, which causes a relatively difficult operation. Moreover, only an anular part of the rod is welded to the ball, and the junction is relatively weak.
An object of the invention is to provide a piston rod manufacturing method and apparatus capable to realize a relatively simple and economical production process, in which the junction is sufficiently strong.
Another object of the invention is to provide a piston rod manufacturing method and apparatus capable of ensuring an overall length of the piston rod easily at a high dimensional accuracy.
Still another object of the invention is to provide a piston rod manufacturing method capable of tempering the piston rod easily without entailing a special heat treatment apparatus therefor.
A further object of the invention is to provide a method and apparatus for manufacturing piston rod capable of facilitating a detachment of ball from a ball holder and also simplifying a clamp mechanism.
According to the present invention it is provided a piston rod manufacturing method as defined in claim 1.

The invention will now be described with reference to the accompanying drawings, wherein:

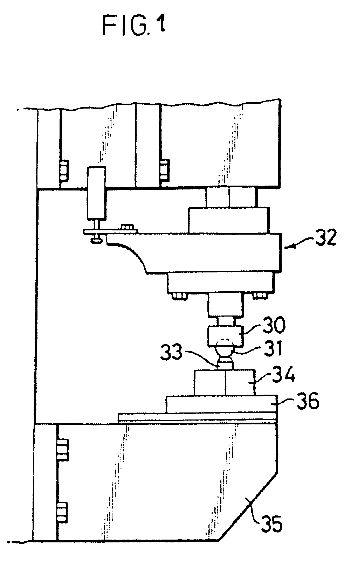

Fig. 1 is a side view showing a piston rod manufacturing apparatus used for the method given in one embodiment of the invention;

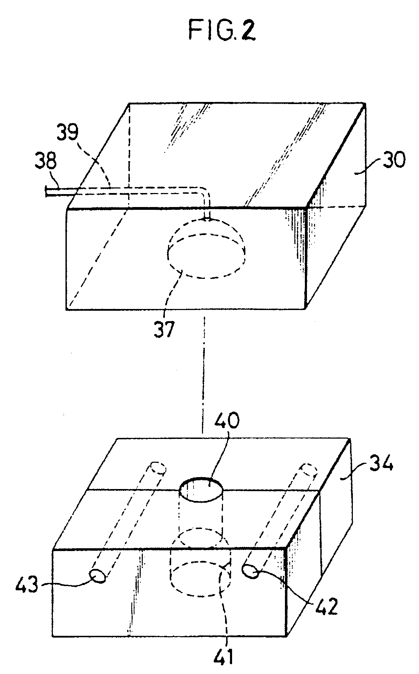

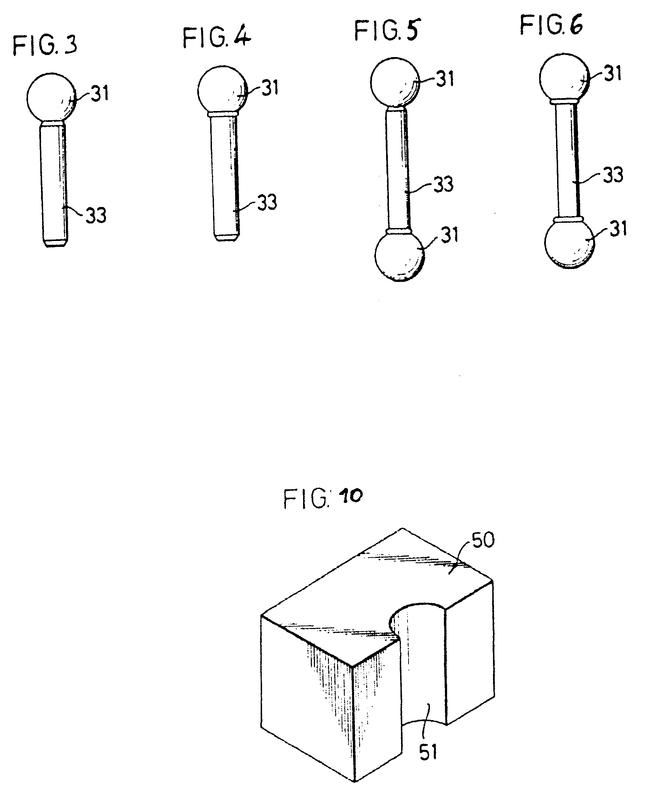

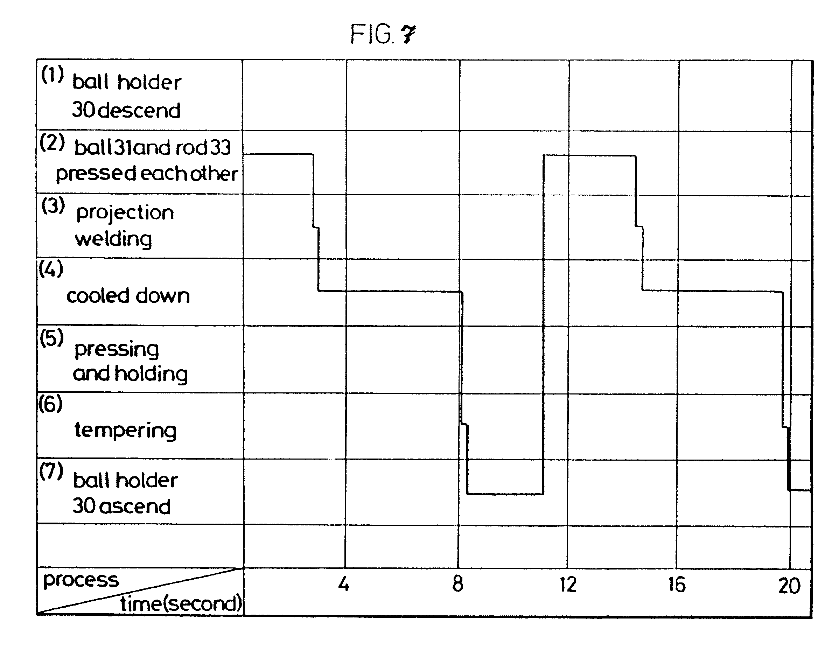

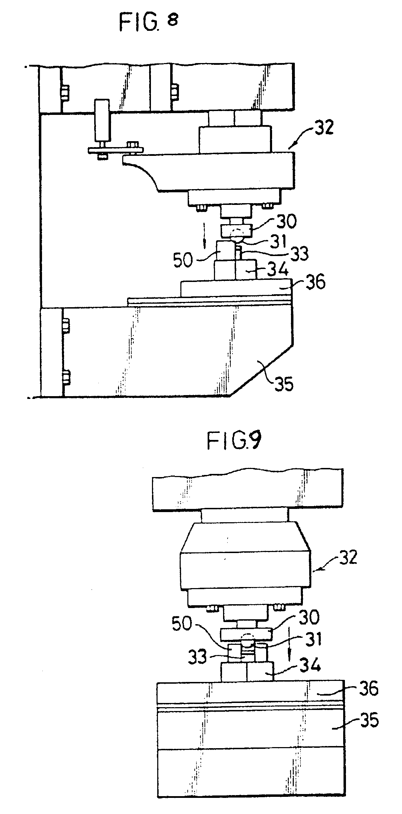

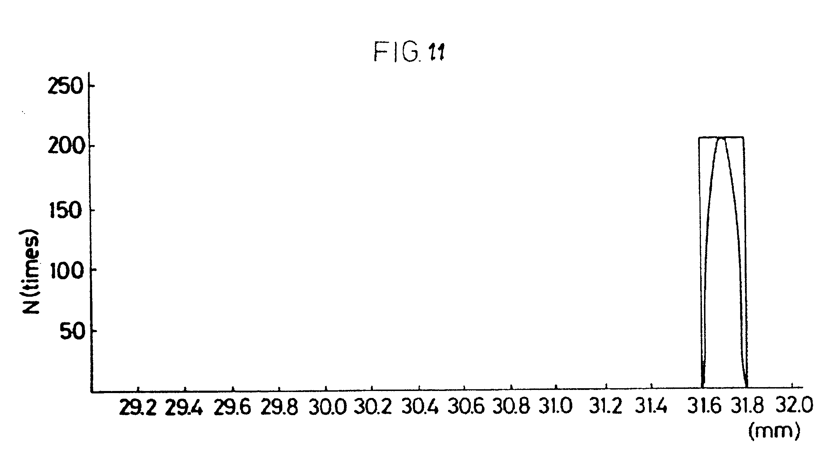

Fig. 2 is a perspective view showing the ball holder and the rod holder of Fig. 1 in detail; Fig. 3 to Fig. 6 are explanatory drawings showing a method for welding a ball to a rod; Fig. 7 is an explanatory drawing showing a required time for each process; Fig. 8 is a side view showing a piston rod manufacturing apparatus given in one embodiment of the invention; Fig. 9 is a perspective view showing the ball holder and the rod holder of Fig. 8 in detail; Fig. 10 is a perspective view showing a stopper in detail; Fig. 11 to Fig. 13 are explanatory drawings showing a dispersion in dimensions of the piston rod; Fig. 14 is a side view showing a conventional piston rod manufacturing method; Fig. 15 is an explanatory drawing showing the conventional piston rod manufacturing method; Fig. 16 is an explanatory drawing showing an oxide formed on a weld zone of the piston rod; Fig. 17 is an explanatory drawing showing a conventional piston rod manufacturing apparatus; Fig. 18 is a side view showing a conventional ball; Fig. 19 is a side view showing the state wherein a ball is welded to a rod through friction; Fig. 20 is a side view showing a conventional piston rod; Fig. 21 to Fig. 23 are explanatory drawings showing a dispersion in dimensions of the conventional piston rod.

Fig. 1 represents a piston rod manufacturing apparatus used for one embodiment of the method according to the invention, and in the drawing a reference numeral 30 denotes a ball holder for holding a ball 31. The ball holder 30 is formed of a conductive metal such as copper or the like. Then, the ball holder 30 is supported on the lower end of a head 32.

A rod holder 34 for holding a rod 33 is disposed under the ball holder 30. The rod holder 34 is formed of a conductive metal such as copper or the like and supported on a table 36 fixed on a pedestal 35.

Fig. 2 shows the ball holder 30 and the rod holder 34 in detail, wherein a spherical recess 37 for sucking and holding the ball 31 is formed in the ball holder 30 on a side of the rod holder 34. The recess 37 is so formed as to fit on and contact close with a hemisphere of the ball 31 when the ball 31 is sucked in.

Then, a through hole 39 communicating with a vacuum suction device (not indicated) through a tube 38 or the like opens to the recess 37.

The rod holder 34 is disposed under the ball holder 30. A rod holding hole 40 for holding the rod 33 therethrough is perforated vertically in the rod holder 34.

The rod holder 34 is divided into two by a section dividing the rod holding hole 40 axially into two, and an aperture of the rod holding hole 40 is made smaller than an outside diameter of the rod 33. Then, a lower portion of the rod holding hole 40 is enlarged 41 so as to enclose the ball 31 therein.

A pair of through holes 42, 43 are provided on sides of the rod holder 34 across the rod holding hole 40, bolts (not indicated) are inserted from ends of the through holes 42, 43 and nuts are screwed on other ends of the bolts, thereby coupling the rod holder 34 divided into two.

The method of the invention is embodied as follows by means of the piston rod manufacturing apparatus constructed as above.

That is, according to the invention, first the ball 31 is inserted in the recess 37 of the ball holder 30 constituting one electrode, and then the vacuum suction device is actuated, thus sucking and holding the ball 31 securely in the recess 37.

On the other hand, the rod 33 is held in the rod holder 34 constituting another electrode, however, in this case, bolts and nuts for the rod holder 34 are once loosened, the rod 33 is then inserted in the rod holding hole 40, and the nuts are retightened to the bolts.

The ball holder 30 is lowered by a move of the head 32 thereafter, and a lower end of the ball 31 is pressed onto one end surface of the rod 33 as shown in Fig. 3.

From impressing a voltage between the ball holder 30 and the rod holder 34 under the state above, a current flows through the ball 31 and the rod 33, and the ball 31 and the rod 33 are subjected to a projection welding as shown in Fig. 4.

Then in the method of the invention, the projection welding zone is cooled down under the state above, and then a current is carried between the ball holder 30 and the rod holder 34 thereafter to a tempering of the projection welding zone.

From reversing operation of the vacuum suction device thereafter, the air is fed to the recess 37 by way of the through hole 39, and thus the ball 31 is desorbed from the recess 37.

The ball holder 30 is then elevated from the state above by a move of the head 32, bolts and nuts for the rod holder 34 are loosened, and then the rod 33 with the ball 31 welded thereto is extracted from the rod holder 34.

With the welded ball 31 kept down as shown in Fig. 5, the rod 33 is again inserted in the rod holding hole 40 of the rod holder 34, and the ball 31 is welded to the other end of the rod 33 through projection as shown in Fig. 6 according to the method almost similar to the foregoing.

Then, the projection welding zone is cooled down under the state above as in the case of the foregoing, a current is carried between the ball holder 30 and the rod holder 34 thereafter, and thus the projection welding zone is tempered.

Fig. 7 indicates a relation between each process described above and processing time, and in the method of the invention the projection welding and the tempering can be realized within a very short period of time.

Then in the embodiment, a carbon steel for mechanical structure consisting, for example, of S20CD steel is used for the rod 33, and a high carbon chrome bearing steel consisting, for example, of SUJ2 steel is used for the ball 31.

With the ball 31 and the rod 33 pressed each other on a force of 260 to 300 kg, the projection welding is carried out by flowing a current of 4,800 to 5,300 amperes for 0.12 to 0.14 seconds.

On the other hand, the ball 31 and the rod 33 kept pressed each other are cooled down for 4.8 sec. or longer after the projection welding, and then tempering is carried out by flowing a current of 4,700 to 4,900 amperes for 0.2 to 0.24 seconds.

That is, according to the piston rod manufacturing method described above, the ball 31 is held in the ball holder 30 working as one electrode, while the rod 33 is held in the rod holder 34 working as another electrode, an end surface of the rod 33 is brought into contact with the ball 31, and then a current is carried between the ball holder 30 and the rod holder 34 to a projection welding of the rod 33 and the ball 31, a projection welding zone is cooled down under the state above, and then a current is carried between the ball holder 30 and the rod holder 34 to a tempering of the projection welding zone.

Accordingly, the tempering can be performed with the rod 33 and the ball 31 welded through projection, therefore any special heat treatment apparatus is not required, and the piston rod can be tempered easily.

Then, in the above-described embodiment, the description refers to the case where tempering is carried out every time the ball 31 is welded to one end of the rod 33 through projection, however, the invention is not necessarily limited to such embodiment only, and both sides of the rod 33 may be tempered concurrently, needless to say, after projection welding of the ball 31 to both ends of the rod. Further, while the system was such that the rod holder 34 was clamped by bolts and nuts, the rod holder 34 may be pushed from both sides otherwise by means, for example, of a vice or the like.

Still further in the piston rod manufacturing method described above, the ball 31 is sucked and so held in the ball holder 30 working as one electrode through vacuuming, while the rod 33 is held in the rod holder 34 working as another electrode, and after bringing an end surface of the rod 33 into contact with the ball 31, a current is carried between the ball holder 30 and the rod holder 34 to welding the rod 33 to the ball 31, therefore the ball 31 need not be held by a mechanical clamp mechanism, and the ball 31 can be detached easily from the ball holder 30.

Then, in the invention, since projection welding is employed, an excessive force will not work on the ball 31 unlike friction welding, and the ball 31 can be held thoroughly on suction.

Further, in the above-described piston rod manufacturing apparatus, the ball holder 30 and the rod holder 34 each consisting of a conductive metal are disposed moveably each other toward both opposite sides, the spherical recess 37 for sucking and holding the ball 31 therein is formed on the ball holder 30 at a side of the rod holder 34, and the rod holding hole 40 for inserting and holding the rod 33 therein is formed on the rod holder 34, therefore the ball 31 is inserted in the spherical recess 37 formed on the ball holder 30, and then the ball 31 is sucked in, thus detaching the ball 31 easily from the ball holder 30.

Then, the ball 31 is kept fitted in the spherical recess 37 on suction, therefore the ball 31 can be held in the ball holder 30 at high precision.

In the embodiment described above, meanwhile, the description refers to the case where the ball holder 30 is constructed to be moveable vertically, however, the invention is not necessarily limited to such embodiment, and the rod holder 34 may be constructed moveably, needless to say, vertically.

Fig. 8 and Fig. 9 represent another embodiment of the piston rod manufacturing apparatus of the invention, which takes the same construction as the embodiment represented in Fig. 1 and Fig. 2 except that a stopper 50 for regulating the distance whereat the ball holder 30 comes close to the rod holder 34 is provided. Accordingly, like reference numerals represent like parts of the embodiment given in Fig. 1 and Fig. 2 barring the stopper 50, and hence no further description will be made thereof.

As shown in Fig. 10, the stopper 50 is formed of an insulating material consisting, for example, of bakelite, and a semicircular recess 51 larger than the outside diameter of the ball 31 is formed on one side thereof.

Then, the stopper 50 is disposed on a top of the rod holder 34.

In the piston rod manufacturing apparatus constructed as above, first the ball 31 is inserted in the recess 37 of the ball holder 30 constituting one electrode, and from actuating the vacuum suction apparatus under such state, the ball 31 is sucked and held securely in the recess 37.

On the other hand, the rod 33 is held in the rod holder 34 constituting another electrode, wherefore bolts and nuts for the rod holder 34 are once loosened, the rod 33 is then inserted in the rod holding hole 40, and the nuts are retightened to the bolts.

After that the ball holder 30 is lowered by a move of the head 32, and a lower end of the ball 31 is brought into contact with one end surface of the rod 33 as shown in Fig. 3.

From impressing a voltage between the ball holder 30 and the rod holder 34 thereafter, a current flows through the ball 31 and the rod 33 to a projection welding of the ball 31 and the rod 33 as shown in Fig. 4. In this case, the ball holder 30 is shifted downward a little by a normal quantity of penetration, a lower surface of the ball holder 30 is brought into contact with a top of the stopper 50, and thus the ball holder 30 comes to stop at the position. In such state, a predetermined pressure works on the ball 31.

From reversing operation of the vacuum suction apparatus thereafter, the air is fed to the recess 37 by way of the through hole 39, and thus the ball 31 is desorbed from the recess 37.

The ball holder 30 is shifted upward from such state by a move of the head 32, and after loosening bolts and nuts for the rod holder 34, the rod 33 with the ball 31 welded thereto is extracted from the rod holder 34.

After that, as shown in Fig. 5, with the welded ball 31 downward, the rod 33 is again inserted in the rod holding hole 40 of the rod holder 34, and the ball 31 is welded to another end of the rod 33, as shown in Fig. 6, according to the method almost similar to the foregoing.

Then, in the above-described piston rod manufacturing apparatus, the ball holder 30 and the rod holder 34 each consisting of a conductive metal are disposed moveably each other toward both opposite sides, the spherical recess 37 for sucking and holding the ball 31 therein is formed on the ball holder 30 at a side of the rod holder 34, the rod holding hole 40 for inserting and holding the rod 33 therein is formed on the rod holder 34, and further the stopper 50 consisting of an insulating material for regulating the distance whereat both holders come close to each other is disposed between the ball holder 30 and the rod holder 34, therefore a gap between the ball holder 30 and the rod holder 34 at the time of projection welding is kept at high dimensional accuracy by the stopper 50.

Consequently, an overall length of the piston rod obtained through projection welding can be kept at high dimensional accuracy.

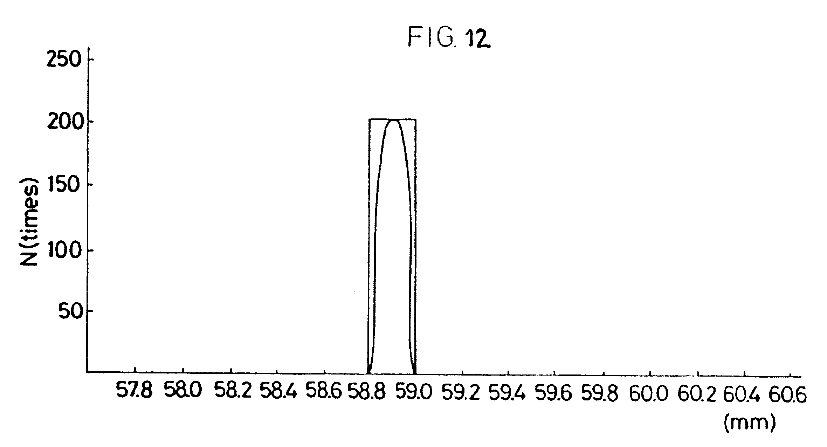

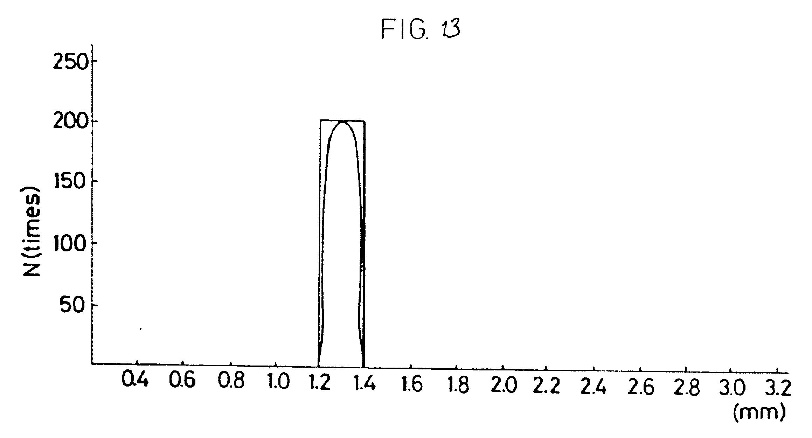

That is, in the piston rod manufacturing apparatus of the embodiment, in case the balls 31 of a diameter are welded, through projection, to both ends of the rods 33 almost of a length as shown in Fig. 11, an overall length of the piston rod can be kept at high dimensional accuracy as shown in Fig. 12, and the length of penetration in this case can also be kept at high dimensional accuracy as shown in Fig. 13.

Then, in the aforementioned embodiment, the description refers to the case where the ball holder 30 is constructed to be moveable vertically, however, the invention is not necessarily limited to such embodiment, and the rod holder 34 may be constructed, needless to say, to be moveable vertically otherwise.

## Claims

1. A piston rod manufacturing method, wherein a ball (31) is fixed on an end surface of a rod (33) through projection welding, whereby said ball is held in one electrode (30), while said rod is held in another electrode (34), said ball holder and rod holder electrodes (30, 34) consisting each of a conductive metal, the end surface of said rod (33) is brought into contact with said ball (31), a current is then carried between said electrodes for welding said rod and ball, characterized in that:
before projection welding, said end surface of said rod (33) is peripherally chamfered, said ball (31) is sucked and held in said one electrode (30) through vacuuming, said one electrode (30) carrying the ball (31) and said other electrode (34) carrying the rod (33) are moved one toward the other until a predetermined mutual distance is reached, and then current is carried for projection welding; and
after projection welding, the projection welding zone is cooled down under the state above and then a current is carried between said electrodes (30, 34) for tempering said projection welding zone.

2. A piston rod manufacturing apparatus, for carrying out the method according to claim 1, comprising a ball holder (30) and a rod holder (34) disposed movably each other toward both opposite sides, a spherical recess (37) for holding a ball (31) therein being formed on said ball holder at a side of said rod holder and said ball holder (30) and rod holder (34) being composed of a conductive metal, characterized in that a rod holding hole (40) for inserting and holding said rod (33) is formed on said rod holder, the ball (31) is held by suction and stopper means (50) are placed between said ball holder (30) and rod holder (34) to regulate the minimum distance at which said holders (30, 34) come close to each other during projection welding.

3. An apparatus according to claim 2, characterized in that said stopper means (50) comprise an insulating material placed on one (34) of said two holders, in front of the other holder (30).

## Patentansprüche

1. Kolbenstangen-Herstellungsverfahren, wobei eine Kugel (31) an einer Stirnfläche einer Stange (33) durch Projektionsschweißen befestigt wird, wobei die Kugel in einer Elektrode (30) gehalten wird, während die Stange in einer anderen Elektrode (34) gehalten wird, wobei die Kugelhalterelektrode und die Stangenhalterelektrode (30, 34) jeweils aus leitendem Metall bestehen, wobei die Stirnfläche der Stange (33) mit der Kugel (31) in Berührung gebracht wird, wobei ein Strom sodann zwischen den Elektroden zwecks Verschweißens der Stange mit der Kugel fließen gelassen wird,
dadurch gekennzeichnet, daß vor dem Projektionsschweißen die genannte Stirnfläche der Stange (33) auf ihrem Umfang angefast wird, die Kugel (31) angesaugt und in der genannten einen Elektrode (30) durch Unterdruck gehalten wird, wobei die genannte eine Elektrode (30), die die Kugel (31) trägt, und die genannte andere Elektrode (34), die die Stange (33) trägt, so lange gegeneinanderbewegt werden, bis ein vorbestimmter gegenseitiger Abstand erreicht wird, und wobei sodann zum Zwecke des Projektionsschweißens ein Strom fließen gelassen wird, und wobei nach dem Projektionsschweißen die Projektionsschweißzone im obigen Zustand heruntergekühlt wird, und sodann ein Strom zwischen den genannten Elektroden (30, 34) fließen gelassen wird, um die Projektionsschweißzone zu tempern.

2. Kolbenstangen-Herstellungsvorrichtung zum Durchführen des Verfahrens gemäß Anspruch 1, mit einem Kugelhalter (30) und einem Stangenhalter (34), die mit einander gegenüberüberliegenen Seiten beweglich zueinander angeordnet sind, mit einer kugeligen Aussparung (37), die dem Halten einer Kugel (31) dient und die am Kugelhalter an einer Seite des Stangenhalters angeformt ist, und wobei der Kugelhalter (30) und der Stangenhalter (34) jeweils aus leitendem Metall bestehen,
dadurch gekennzeichnet, daß eine Stangenhalterbohrung (40) zum Einführen und Halten der Stange (33) dem Stangenhalter angeformt ist, daß die Kugel (31) durch Saugung festgehalten ist, und daß ein Anschlag (50) zwischen dem Kugelhalter (30) und dem Stangenhalter (34) angeordnet ist, um den minimalen Abstand einzustellen, bei welchem die Halter (30, 34) während des Projektionsschweißens nahe zusammenkommen.

3. Vorrichtung nach Anspruch 2, dadurch gekennzeichnet, daß der Anschlag (50) ein isolierendes Material aufweist, das an einem (34) der beiden Halter vor dem anderen Halter (30) vorgesehen ist.

## Revendications

1. Procédé de fabrication d'une tige de piston dans lequel on fixe une tête sphérique (31) sur une face frontale d'une tige (33), par soudage par bossage, cette tête sphérique étant maintenue dans une première électrode (30) tandis que la tige est maintenue dans une seconde électrode (34), les électrodes (30,34) constituant un porte-tête et un porte-tige étant réalisées chacune en un métal conducteur, on amène la face frontale de la tige (33) en contact avec la tête sphérique (31), et on fait passer ensuite un courant entre les électrodes, afin de souder la tige et la tête sphérique, caractérisé en ce qu'avant le soudage par bossage on chanfreine la périphérie de la face frontale de la tige (33), on aspire et maintient la tête sphérique (31), sous l'effet du vide, dans la première électrode (30), on déplace la première électrode (30) portant la tête sphérique (31), et la seconde électrode (34) portant la tige (33), l'une en direction de l'autre, jusqu'à ce qu'une distance mutuelle prédéterminée soit atteinte, on fait passer ensuite le courant pour réaliser le soudage par bossage, et après cette opération de soudage par bossage, on refroidit la zone du soudage par bossage, dans l'état précité, et on fait passer ensuite un courant entre les électrodes (30,34) afin d'effectuer un revenu de la zone de soudage par bossage.

2. Appareil de fabrication d'une tige de piston, mettant en oeuvre le procédé suivant la revendication 1, comprenant un porte-tête (30) et un porte-tige (34) montés mobiles l'un par rapport à l'autre, en direction des deux côtés opposés, un creux sphérique (37) pour maintenir une tête sphérique (31), ce creux étant formé sur le porte-tête, sur un côté de celui-ci tourné vers le porte-tige, le porte-tête (30) et le porte-tige (34) étant constitués d'un métal conducteur, caractérisé en ce qu'un trou (40) de maintien d'une tige, prévu pour l'insertion et le maintien de la tige (33), est formé sur le porte-tige, la tête sphérique (31) est maintenue par succion et un élément d'arrêt (50) est placé entre le porte-tête (30) et le porte-tige (34) de manière à ajuster la distance minimale à laquelle les supports (30,34) viennent à proximité immédiate l'un de l'autre, pendant l'opération de soudage par bossage.

3. Appareil suivant la revendication 2 caractérisé en ce que l'élément d'arrêt (50) est constitué en un matériau isolant placé sur l'un (34) des deux supports, en face de l'autre support (30).
